# EUROPEAN PATENT SPECIFICATION

(11) **EP 0 855 303 B1**
(45) Date of publication and mention of the grant of the patent: **13.08.2003**
(21) Application number: 97309091.3
(22) Date of filing: 12.11.1997
(51) Int. Cl.: B60J 10/00, B60J 10/08

(54) **Sealing, trimming and finishing strips**
Dichtungs-, Trimm- und Profilleisten
Bandes d'étanchéité, de garnissage et de finition

(30) Priority: 28.01.1997 GB 9701654
(43) Date of publication of application: 29.07.1998
(73) Proprietor: GenCorp Property Inc., Sacramento, CA 95853-7012 (US)
(72) Inventor: Niemanns, Gerd, 4155 Grefrath 1 (DE)
(74) Representative: Foster, David Martyn

(56) References cited:
- EP-A- 0 390 568
- EP-A- 0 612 568
- FR-A- 1 086 095
- GB-A- 2 279 985
- PATENT ABSTRACTS OF JAPAN vol. 14, no. 291 (M-989) [4234] , 22 June 1990 & JP 02 092721 A (KINUGAWA RUBBER), 3 April 1990,

## Description

The invention relates to longitudinally extending sealing, trimming or finishing strips.

More particularly, the invention relates to a longitudinally extending sealing, trimming or finishing strip for mounting on a frame extending around an opening in a vehicle body, comprising flexible material defining a longitudinally extending channel for embracingly gripping an edge of the frame to mount the strip on the frame, and flexible covering material secured to and running along a surface of the flexible material on the outside of the channel so as to be externally visible, the covering material being made of at least two portions having respectively different appearances. Such strips are known e.g. from EP-A- 0612568.

According to the invention, such a strip is characterised in that said at least two portions are arranged longitudinally end to end.

Sealing, trimming and finishing strips embodying the invention, will now be described, by way of example only, with reference to the accompanying diagrammatic drawings in which:
Figure 1 is a perspective side view of a motor vehicle body;
Figure 2 is a cross-section through a door frame of the vehicle body of Figure 1, showing one of the strips in position; and
Figure 3 is a perspective view of the strip of Figure 2.

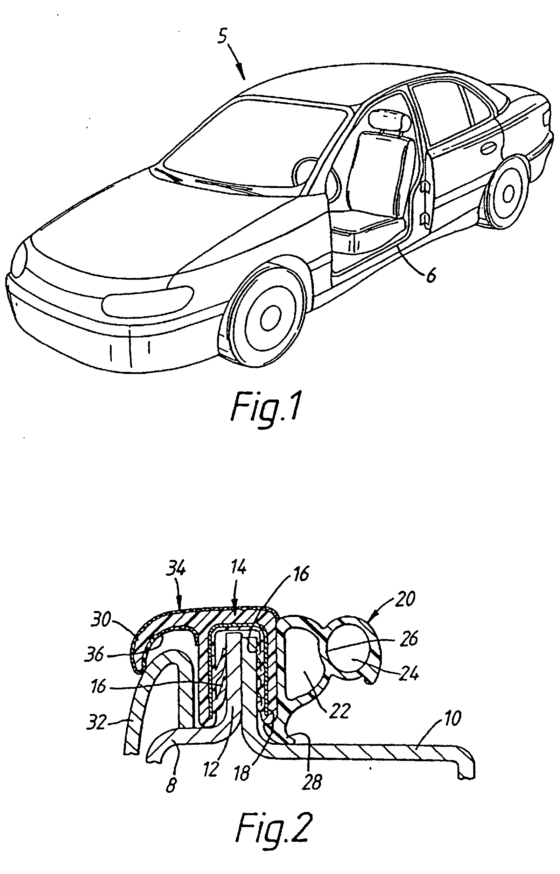

In Figure 1, the motor vehicle 5 has its left hand front door removed to show a sealing strip 6 attached to the edge of the door frame and running around the periphery of the frame. As will be explained in more detail with reference to Figure 2, the door closes onto this sealing strip to form a weather-tight seal.

Referring to Figure 2, the door frame is formed by inner and outer body panels 8 and 10 which are brought together at the edge of the door frame and welded (e.g. spot-welded at spaced intervals) to form a flange 12. The sealing strip 6 is mounted on this flange. As shown in Figure 2, the sealing strip has a channel-shaped gripping portion 14 which embracingly grips the flange 12. The gripping portion 14 is preferably made by extrusion, from plastics or rubber or similar material. The extrusion process provides integral gripping lips 16 which extend inwardly across the channel from opposite side walls of the channel and makes frictional contact with the sides of the flange 12. There may be more or fewer lips than as shown in the drawing. Advantageously, they are extruded from relatively soft material which is found to increase their frictional grip against the flange 12. Advantageously, they are extruded from material which is softer than that of the remainder of the gripping portion 14.

As shown in Figure 2, a channel-shaped resilient metal reinforcement or carrier 18 is incorporated within the extruded material of the gripping portion 14 and increases the grip of the gripping portion on the flange. The carrier 18 may be made of metal strip provided with apertures to increase its flexibility, such as slots or slits, or it may be completely unapertured. It may comprise a series of (inverted) U-shaped elements arranged side-by-side to define the channel shape and integrally connected to each other by flexible links or perhaps entirely disconnected from each other. Other forms of carrier are possible. The carrier 18 may be incorporated within the gripping portion by a cross-head extrusion process.

Attached to one outside side wall of the gripping portion 14 is a sealing portion 20. This is advantageously extruded from flexible material such as rubber or plastics material and may be advantageously of cellular construction. In the particular example shown in Figure 2, the sealing portion 20 is arranged in the form of two hollow tubular parts 22 and 24 integrally connected to each other along a common wall 26. However, other forms of construction may be used instead.

In the example illustrated, the sealing portion 20 is formed separately from the gripping portion 14 and is then secured to the gripping portion such as by means of adhesive. However, instead, the sealing portion 20 may be extruded integrally with the gripping portion 14.

In use, the gripping portion 14 attaches the strip 6 to the flange 12 so that the sealing portion 20 runs around the frame of the door opening (as shown in Figure 1), with the sealing portion presenting itself in an outwardly facing direction. It is thus compressed by the closing door and forms the required weather-tight seal. The sealing portion 20 is advantageously provided with a lip 28 to provide an additional seal against the body panel 10.

The gripping portion 14 is advantageously extruded to provide an integral lip 30 (a "cosmetic lip") which, in use, runs along the inside of the door frame. This lip 30 extends over the edge of a trim panel 32 on the inside of the vehicle body and hides the edge and helps to secure the trim panel in position.

In order to enhance the appearance of the sealing strip, and possibly to match the interior trim of the vehicle, the outside surface of the gripping portion 14 is provided with a textile or fabric covering 34. The textile covering 34 may be extended over the underside of the cosmetic lip 30, as shown at 36, as explained in more detail in our co-pending United Kingdom patent specification No. 2310877.

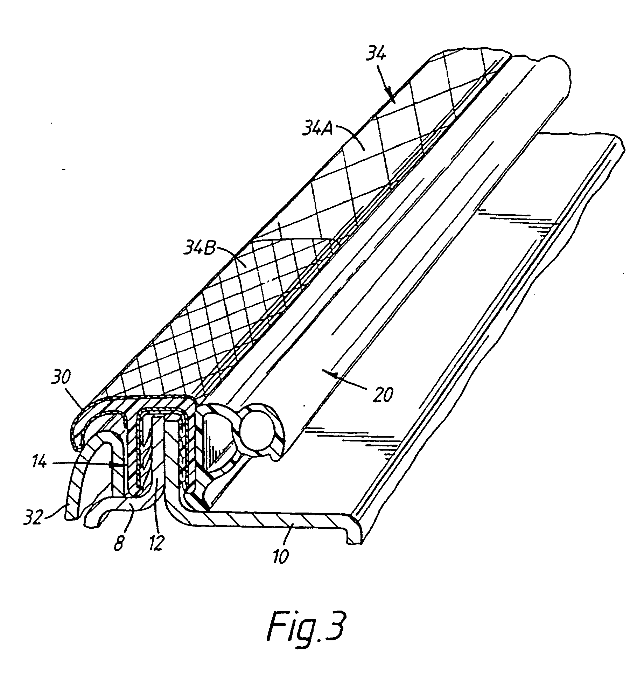

Figure 3 shows the textile or fabric covering 34 in more detail. As shown in Figure 3, the covering 34 is arranged to present two differently patterned portions 34A and 34B arranged end to end with each other and extending over respective parts of the external surface of the strip. Advantageously, the two portions 34A and 34B are integral with each other - that is, the fabric or covering is made in one piece.

Instead of having different patterns, or in addition to having different patterns, the two portions 34A and 34B can have different colours.

In this way, different longitudinal portions of the sealing strip around the door frame can be arranged to present differently patterned or differently coloured aspects, to match or contrast with the interior trim of the vehicle. Although Figure 3 shows only two differently patterned or differently coloured fabric portions, it will be understood that there may be more than two such portions.

If desired, the fabric or textile covering may extend over all or part of the sealing portion 20.

It will be understood that the use of a textile or fabric covering having two or more differently coloured or differently patterned portions, as shown in Figure 3, may be applied to sealing strips having a configuration different from that shown in Figures 2 and 3.

## Claims

1. A longitudinally extending sealing, trimming or finishing strip (6) for mounting on a frame extending around an opening in a vehicle body (5), comprising resilient material defining a longitudinally extending channel (14) for embracingly gripping an edge (12) of the frame to mount the strip (6) on the frame, and flexible covering material (34) secured to and running along a surface of the resilient material (14) on the outside of the channel so as to be externally visible, the covering material (34) being made of at least two portions (34A,34B) having respectively different appearances, **characterised in that** said at least two portions (34A,34B) are arranged longitudinally end to end.

2. A strip according to claim 1, **characterised in that** the portions (34A,34B) of the covering material (34) are integral portions of a common material.

3. A strip according to claim 1 or 2, **characterised in that** the portions (34A,34B) of the covering material have different patterns.

4. A strip according to any one of claim 1 to 3, **characterised in that** the portions (34A,34B) of the covering material have different colours.

5. A strip according to any one of claims 1 to 4, **characterised in that** the covering material (34) is a fabric or textile material.

6. A strip according to any one of claims 1 to 5, **characterised in that** the resilient material (14) is extruded plastics or rubber material.

7. A strip according to any one of claims 1 to 6, **characterised by** a soft sealing portion (20) extending longitudinally of the strip and mounted on an external face of the resilient material (14) so as to extend around the frame when the strip is mounted thereon and to be sealingly compressed by a closure member for the opening.

8. A strip according to claim 7, **characterised in that** the covering material (34) extends over at least part of the outside of the sealing portion (20).

9. A strip according to any one of claims 1 to 8, **characterised in that** the resilient material (14) defines a lip (30) running longitudinally along the length of the strip and extending laterally from the outside of the channel, and **in that** the covering material (34) extends over at least part of this lip (30).

## Patentansprüche

1. In Längsrichtung sich erstreckende Dicht-, Zier- oder Abdeckleiste (6) zum Anbringen an einen sich entlang des Umfangs einer Öffnung einer Fahrzeugkarosserie (5) erstreckenden Rahmen, mit rückfederndem Material, welches einen sich in Längsrichtung erstreckenden Kanal (14) definiert, der eine Kante (12) des Rahmens umgreift, um die Leiste (6) auf dem Rahmen anzubringen, und mit flexiblem Abdeckmaterial (34), das befestigt ist an und entlang einer Oberfläche des rückfedernden Materials (14) an der Außenseite des Kanals entlangläuft, um so nach außen sichtbar zu sein, wobei das Abdeckmaterial (34) aus mindestens zwei Teilen (34 A, 34 B) mit entsprechend unterschiedlichem Aussehen hergestellt ist, **dadurch gekennzeichnet, dass** die mindestens zwei Teile (34A, 34B) in Längsrichtung Ende an Ende angeordnet sind.

2. Leiste nach Anspruch 1, **dadurch gekennzeichnet, dass** die Teile (34A, 34B) des Abdeckmaterials (34) einstückige Bereiche eines gemeinsamen Materials sind.

3. Leiste nach Anspruch 1 oder 2, **dadurch gekennzeichnet, dass** die Teile (34A, 34B) des Abdeckmaterials (34) unterschiedliche Muster aufweisen.

4. Leiste nach einem der Ansprüche 1 bis 3, **dadurch gekennzeichnet, dass** die Teile (34A, 34B) des Abdeckmaterials (34) unterschiedliche Farben aufweisen.

5. Leiste nach einem der Ansprüche 1 bis 4, **dadurch gekennzeichnet, dass** das Abdeckmaterial (34) ein Gewebe oder textiles Material ist.

6. Leiste nach einem der Ansprüche 1 bis 5, **dadurch gekennzeichnet, dass** das rückfedernde Material (14) extrudiertes Kunststoff- oder Kautschukmaterial ist.

7. Leiste nach einem der Ansprüche 1 bis 6, **gekennzeichnet durch** einen weichen Dichtteil (20), der sich in Längsrichtung der Leiste erstreckt und auf einer äußeren Fläche des rückfedernden Materials (14) angebracht ist, so daß es sich um den Rahmen erstreckt, wenn die Leiste darauf angebracht ist, und um abdichtend **durch** das Schließmittel für die Öffnung zusammengedrückt zu werden.

8. Leiste nach Anspruch 7, **dadurch gekennzeichnet, dass** das Abdeckmaterial (34) sich mindestens teilweise über die Außenseite des Dichtteils (20) erstreckt.

9. Leiste nach einem der Ansprüche 1 bis 8, **dadurch gekennzeichnet, dass** das rückfedernde Material (14) eine Lippe (30) definiert, die in Längsrichtung entlang der Länge der Leiste läuft und sich lateral von der Außenseite des Kanals erstreckt, und daß das Abdeckmaterial (34) sich zumindest teilweise über diese Lippe (30) erstreckt.

## Revendications

1. Bande d'étanchéité, de garniture ou de finition s'étendant longitudinalement (6) pour le montage sur un cadre s'étendant autour d'une ouverture dans une carrosserie de véhicule (5), comportant une matière élastique définissant un canal s'étendant longitudinalement (14) destiné à saisir en l'entourant un bord (12) du cadre afin de monter la bande (6) sur le cadre, et une matière de revêtement flexible (34) fixée sur et s'étendant le long d'une surface de la matière élastique (14) sur l'extérieur du canal de façon à être visible de l'extérieur, la matière de revêtement (34) étant constituée par au moins deux parties (34A, 34B) ayant des aspects respectivement différents, **caractérisée en ce que** lesdites au moins deux parties (34A, 34B) sont disposées longitudinalement bout à bout.

2. Bande selon la revendication 1, **caractérisée en ce que** les parties (34A, 34B) de la matière de revêtement (34) sont des parties intégrales d'une matière commune.

3. Bande selon la revendication 1 ou 2, **caractérisée en ce que** les parties (34A, 34B) de la matière de revêtement ont des dessins différents.

4. Bande selon l'une quelconque des revendications 1 à 3, **caractérisée en ce que** les parties (34A, 34B) de la matière de revêtement ont des couleurs différentes.

5. Bande selon l'une quelconque des revendications 1 à 4, **caractérisée en ce que** la matière de revêtement flexible (34) est une toile ou une matière textile.

6. Bande selon l'une quelconque des revendications 1 à 5, **caractérisée en ce que** la matière élastique (14) est une matière plastique ou une matière caoutchouteuse extrudée.

7. Bande selon l'une quelconque des revendications 1 à 6, **caractérisée par** une partie d'étanchéité souple (20) qui s'étend longitudinalement par rapport à la bande et montée sur une face externe de la matière élastique (14) de façon à s'étendre autour du cadre lorsque la bande est montée dessus et afin d'être comprimée de manière étanche par un élément de fermeture pour l'ouverture.

8. Bande selon la revendication 7, **caractérisée en ce que** la matière de revêtement (34) s'étend sur au moins une partie de l'extérieur de la partie d'étanchéité (20).

9. Bande selon l'une quelconque des revendications 1 à 8, **caractérisée en ce que** la matière élastique (14) définit une lèvre (30) s'étendant longitudinalement sur la longueur de la bande et s'étendant latéralement depuis l'extérieur du canal, et **en ce que** la matière de revêtement (34) s'étend sur au moins une partie de cette lèvre (30).
